# EUROPEAN PATENT APPLICATION

(11) **EP 1 166 826 A1**
(43) Date of publication of application: **02.01.2002**
(21) Application number: 00830429.7
(22) Date of filing: 19.06.2000
(51) Int. Cl.: A63B 21/005

(54) **Physical training device**

(71) Applicant: BET4000 S.R.L., 13900 Biella (IT)
(72) Inventor: Bergamo, Marco, 14037 Portacomaro (AT); Zanazzo, Milco, 13900 Biella (IT); Giardino, Marco, 13836 Cossato (BI) (IT); Brunelli, Maria Cristina, 14100 Asti (IT); Dalla Costa, Giorgio, 13900 Biella (IT); Borri, Giovanni, 13900 Biella (IT); Manzoni, Roberto, 14100 Asti (IT)
(74) Representative: Robba, Pierpaolo

(57) **Abstract**

A device (2) for muscle development and/or neuromuscular rehabilitation through a predetermined physical movement of a part of a user's body, comprising a cinematic mechanism moved by the user during said physical movement, a linear electric motor (10) coupled with the cinematic mechanism and a control system for controlling the motor (10), wherein the control system comprises means (12, 14) for driving the motor (10) so as to generate an active force capable of assisting in the physical movement, and means (12, 14) for driving said at least one linear motor (10) so as to generate a passive force capable of contrasting the physical movement.

## Description

The present invention concerns a physical training device.

More particularly, the invention concerns a device for submitting a user to a physical exercise, for muscle training and/or neuromuscular rehabilitation.

In gymnasiums and in the so called "fitness centres" isotonic apparatuses equipped with counterweights are normally used, in which one or more tools, operated by the user, are connected through cinematic mechanisms to one or more weights, replaceable or adjustable according to the requirements.

A limit of such apparatuses is their reduced versatility, due to the possibility of varying only the working load, and the considerable difference between the movements imposed by the apparatus and the natural movements.

To improve such apparatuses, attempts have been made to replace the weights by pneumatic, hydraulic or electrical devices: however, the results attained are not satisfactory from the standpoint of flexibility, reliability and structural complexity.

DE-A 3 920 727 discloses a physical training device using a linear motor in place of the weights. An electronic controller allows varying the resistance opposed by the motor, thereby simulating a weight variation. The force exerted by the motor however is always opposite to the user's movements; moreover such force can be modified, during physical training, only as a function of few parameters, such as the tool position.

The object of the invention is to provide a device for developing muscles, which is equipped with an electronically controlled and particularly flexible, reliable and cheap cinematic/electrical mechanism, and which can be used also for neuromuscular rehabilitation.

The above and other objects are attained by the device made in accordance with the invention, as claimed in the appended claims.

Advantageously, according to the invention, use is made of a linear motor, equipped with an electronic controller, for exerting a force opposed to a physical movement of a userand varying in time according to predetermined parameters and in dependence of the utilisation conditions.

Moreover, thanks to the flexibility of management by the programmable electronic controller, the same linear motor can be used to generate an active force, capable of assisting in the physical movement of the user, thereby allowing muscle training exercises and rehabilitation exercises to be combined in the same machine.

The above and other objects of the invention will become more apparent from the description of a preferred embodiment, with reference to the accompanying drawings, in which:
- Fig. 1 schematically shows a physical training and rehabilitation device made in accordance with the present invention;
- Fig. 2 shows, as a block diagram, an electronic control circuit of a device made in accordance with the present invention; and
- Figs. 3 and 4 schematically show two physical training and rehabilitation devices made in accordance with the present invention.

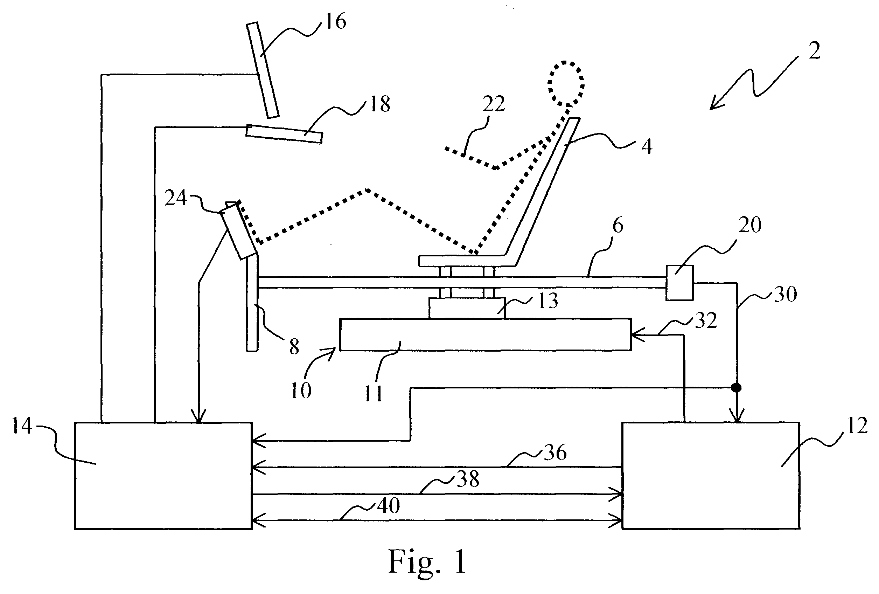

Referring to Fig. 1, a physical training and rehabilitation device comprises a horizontal guide 6, on which a seat 4 is slidably mounted, and a front footboard or rest base 8. Devices of that kind are usually employed to exercise the lower limbs of a user 22, shown in the drawing by a dashed line, through an alternate movement of seat 4 towards or away from base 8.

Seat 4, on which user 22 is sitting, is coupled with a linear motor 10 having a stationary part 11, integral with the device structure, and a movable part 13, integral with seat 4. When the linear motor is powered, through supply line 32 coming from control system or circuit 12, a force proportional to the supply signal is generated between the stationary and the movable parts 11, 13.

A position detector 20 continuously detects the position of seat 4 relative to guide 6 and sends that information, through line 30, to control circuit 12 and to a computer 14.

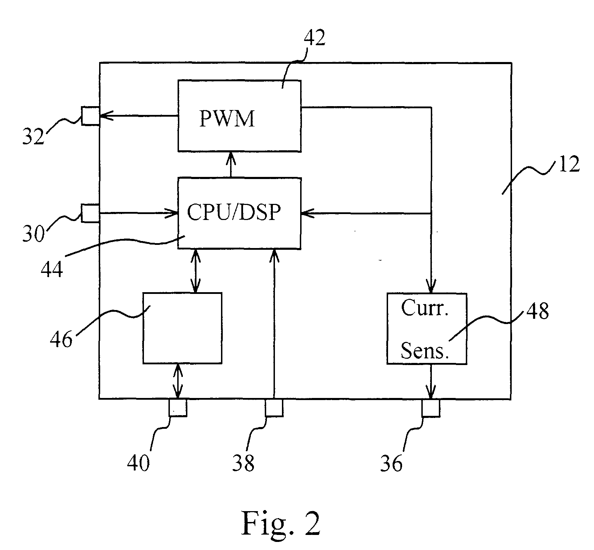

Indeed, control circuit 12 is entrusted with the low level management of the linear motor, through dedicated circuits for the power drive of the motor and circuits for detecting and processing the detector signals, as will be described in detail hereinbelow with reference to Fig. 2. Computer 14, which can be a suitably programmed personal computer, controls on the contrary the general device operation. It receives control signals from a user keyboard 18, displays numerical and graphical information on a display 16 and controls the operation of control circuit 12 so that the device is made to perform the exercise(s) set up.

Through a network connection, e. g. through the Internet, computer 14 can also become connected to a data management and processing service, e. g. provided by the same manufacturer of the device, and exploit such service for software update, new procedure download or data exchange.

Computer 14 communicates with control circuit 12 through a serial data line 40. Moreover, it is capable of directly controlling control circuit 12 through a dedicated hardware control line 38, which is necessary if the immediate reaction of circuit 12, and hence of linear motor 10, to the commands sent by computer 14 is required.

Further, computer 14 receives signals coming from the detectors present in the device, and exploits such information, by processing it depending on the program selected, to generate the control signals for motor 10. Information concerning the position of seat 4, coming from sensor 20, are employed to compute the seat displacement speed and the seat acceleration and deceleration.

A pressure detector 24 detects the pressure applied by the user on the footboard or rest base 8. Detector 24 may be a single detector, thereby detecting the pressure exerted by both feet, or a double detector, one detector for each foot, to have a better accuracy.

Information about the current absorbed by linear motor 10, detected by a suitable circuit 48 inside control circuit 12, is transmitted to computer 14 through line 36 and is used to compute the effort to which motor 10 is submitted at any instant.

Control circuit 12, of which the internal structure is shown in detail in Fig. 2, is internally controlled by a microcontroller 44, equipped with a processing unit (CPU), data and program memories and a digital signal processing unit (DSP). Driving of linear motor 10 is entrusted to a dedicated power circuit 42 which, by exploiting the pulse width modulation (PWM) technique, generates the control signal for the coils of motor 10, according to the commands received from computer 14 through control line 38. The value of the current absorbed by motor 10 is detected at any instant by the relevant detecting circuit 48 and is immediately transmitted to the computer through dedicated line 36. A serial transmission unit 46 allows duplex communication between microcontroller 44 and computer 14.

The structure of the physical training and rehabilitation device 2 disclosed in Fig. 1 is only an example of a device that can be controlled by means the control system according to the present invention.

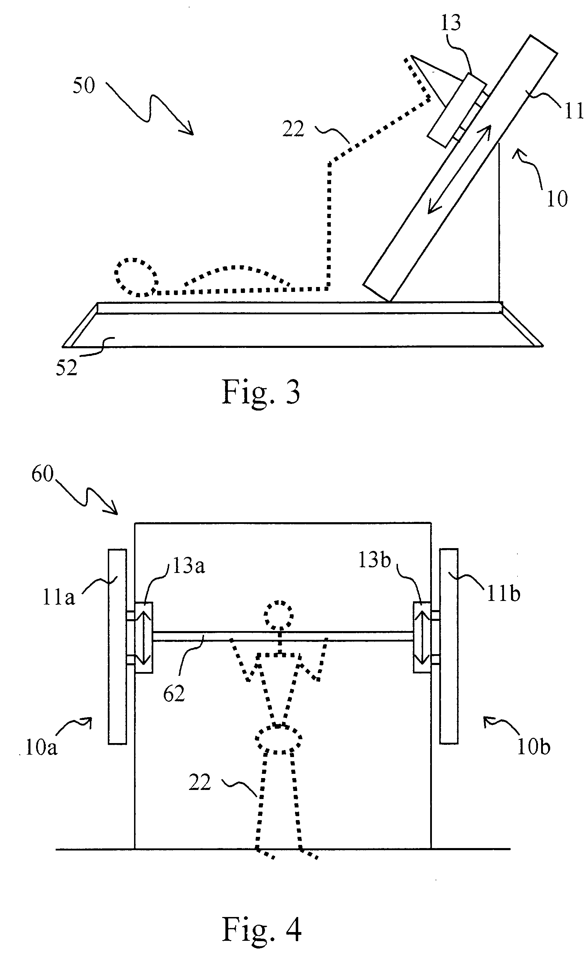

For instance, Fig. 3 shows a physical training and/or rehabilitation device 50 equipped with a stationary horizontal bench 52, on which a user 22 rests, and a movable footboard 54, operated by user 22 himself through the leg movement and coupled with a linear motor 10. Linear motor 10, as far its structure is concerned, is similar to motor 10 previously shown and described with reference to Fig. 1, and comprises a stationary part 11, integral with the device framework, and a movable part 13, integral with footboard 54. The motor control system, the detectors and the terminals for displaying and inputting data are identical to those previously described with reference to Figs. 1 and 2.

A further example of application of the control and management system for linear motors according to the present invention is shown in Fig. 4.

Fig. 4 actually shows a device 60 arranged to exercise the upper limbs. There, a dumbbell 62, generally connected with several weights, is coupled with two linear motors 10a and 10b. Each linear motor comprises a stationary part 11a, 11b, integral with the frame of machine 60, and a movable part 13a, 13b integral with dumbbell 62. Both linear motors 10a, 10b are controlled, in synchronism, by a control system, not shown in the drawing, similar to the system disclosed and shown with reference to Figs. 1 and 2,

Generally, it is possible to construct any device for physical training and rehabilitation of any body part, by replacing the weights with linear motors and equipping the device with the detectors and the control system disclosed above.

The control system disclosed above allows operating the motor as a passive system, i. e. a system opposing a certain resistance to the user's movement or intentions, or as an active system, i. e. system capable of assisting the user in his movement or intentions.

In the passive operation, the following possible kinds of motor resistance can be distinguished.

Isometric resistance: the user exerts a subjective force with constrained device, with predetermined working angles. No displacement occurs, since the force exerted by the user is lower than the resistance opposed by the linear motor.

Constant load resistance: the user performs a movement (stretching/bending) against a certain load that remains constant for the whole stroke. The displacement speed depends of the user capabilities or the program selected.

Constant speed resistance: the user performs a movement (stretching/bending) against a pre-set speed: During the exercise, it is possible to monitor the muscle strength capabilities of the user himself.

Elastic resistance: during movement, resistance increases or decreases in increasing or decreasing manner, in similar way to the behaviour of a rubber band.

Distinct resistance: during a complete working cycle (forward and return phases), any of the resistance kinds mentioned above can be used in each phase. For instance, a constant load resistance can be used for the stretching phase and an elastic resistance can be used for the bending phase.

Mixed resistance: the possibility of varying the resistance even during each individual phase is provided for, by dividing the stroke in short sections.

In active operation, i. e. when the linear motor actively intervenes and assists the user in its movement, the following operational ways are provided for.

Continuous movement, in which working angle, displacement speed and load intensity can be pre-set but they remain constant in time.

Accelerating movement, in which the displacement speed (and possibly the load) increases depending on the working angle.

Decelerating movement, in which the displacement speed (and possibly the load) decreases depending on the working angle.

Distinct movement: during a complete working cycle (forward and return phases), any of the active movements listed above can be used in each phase.

Mixed movement: the possibility of varying the kind of active movement even during each individual phase is provided for, by dividing the stroke in short sections.

Interactively mediated movement: depending of the kind of thrust (duration and application intensity) applied by the user, a response is obtained that is mediated by the motor as to speed and intensity (load) and extent of displacement.

It is also possible to combine, during one and the same exercise, an active movement, in which the device forces the user to make a movement, e. g. during the forward phase, and a passive movement, in which the device opposes a certain resistance to the movement, e. g. during a return phase. Similarly, it is possible to alternate active and passive operation during a same phase.

The flexibility of the management system, entrusted to personal computer 14, allows indeed any combination of operating ways, by merely modifying or updating the management software.

To use the device in completely safe manner, in particular during active operation, a number of safety devices are provided, e.g. mechanical or electronic blocking devices, arranged to immediately stop the device operation in cas of danger. Such devices are well known and are used e.g. in the field of the machine tools.

## Claims

1. A device for muscle development and/or neuromuscular rehabilitation through a predetermined physical movement of a part of a user's body, comprising a cinematic mechanism moved by the user during said physical movement, at least one linear electric motor (10) coupled with said cinematic mechanism and a control system for controlling said at least one motor (10), **characterised in that** said control system comprises means (12, 14) for driving said at least one linear motor (10) so as to generate an active force capable of assisting in said predetermined physical movement, and means (12, 14) for driving said at least one linear motor (10) so as to generate an active force capable of contrasting said predetermined physical movement.

2. A device according to claim 1, wherein, during said predetermined physical movement, comprising a stretching phase and a bending phase of the body part concerned, said at least one linear motor (10) is driven by said control system so as to alternately generate active forces, concordant with said movement, and passive forces, opposing to said movement.

3. A device according to claim 1 or 2, comprising a position detector (20), coupled with said cinematic mechanism and transmitting to said control system (12, 14) information concerning the displacement of said body part during said predetermined physical movement.

4. A device according to claim 3, wherein said control system (12, 14) comprises means for computing the displacement speed of said body part by processing, as a function of time, information concerning the body part displacement, received from the position detector (20).

5. A device according to claim 3, wherein said control system (12, 14) comprises means for computing the acceleration or the deceleration of said body part by processing, as a function of time, information concerning the body part displacement, received from the position detector (20).

6. A device according to claim 1 or 2, comprising a current detector (48) arranged to detect the current absorbed by said at least one linear motor (10).

7. A device according to claim 6, wherein said control system (12, 14) comprises means for computing the resistance to the movement met with by the linear motor (10), by using the information received from said current detector (48).

8. A device according to claims 1 or 2, comprising a horizontal guide (6), a seat (4) slidable on said guide (6) and coupled with said linear motor (10), and a rest base (8) for the feet, for exercising the lower limbs through an alternate movement of the seat (4) towards and away from the base (8).

9. A device according to claim 8, in which the rest base (8) for the feet comprises at least one pressure detector (24) transmitting to said control system (12, 14) information concerning the pressure exerted by the user on said base (8),

10. A device according to claim 9, in which said rest base (8) for the feet comprises two pressure detectors, one for each foot.

11. A device according to claims 1 or 2, comprising a horizontal support bench (52) and a footboard (54), slidable on an inclined plane and coupled to said linear motor (10).

12. A device according to claims 1 or 2, comprising a dumbbell (62) slidable on a vertical guide and coupled with a pair of linear motors (10a, 10b), controlled in synchronism by said control system.
